# EUROPÄISCHE PATENTSCHRIFT

(11) **EP 1 359 388 B1**
(45) Veröffentlichungstag und Bekanntmachung des Hinweises auf die Patenterteilung: **08.12.2004**
(21) Anmeldenummer: 02009921.4
(22) Anmeldetag: 03.05.2002
(51) Int. Cl.: G01B 7/34, G12B 21/02

(54) **SPM-Sensor und Verfahren zu dessen Herstellung**
SPM sensor and method for producing the same
Capteur du type SPM et son procédé de fabrication

(43) Veröffentlichungstag der Anmeldung: 05.11.2003
(73) Patentinhaber: Nanoworld AG, 2007 Neuchâtel (CH)
(72) Erfinder: Lutter, Stefan, 2000 Neuchâtel (CH); Hartmann, Theo, 2000 Neuchâtel (CH); Detterbeck, Manfred, 2000 Neuchâtel (CH)
(74) Vertreter: Klocke, Peter, Dipl.-Ing.

(56) Entgegenhaltungen:
- EP-A- 0 990 195
- US-A- 5 883 387
- KIM B J ET AL: "A self-assembled monolayer-assisted surface microfabrication and release technique" MICROELECTRONIC ENGINEERING, ELSEVIER PUBLISHERS BV., AMSTERDAM, NL, Bd. 57-58, September 2001 (2001-09), Seiten 755-760, XP004302338 ISSN: 0167-9317
- GENOLET G ET AL: "SOFT, ENTIRELY PHOTOPLASTIC PROBES FOR SCANNING FORCE MICROSCOPY" REVIEW OF SCIENTIFIC INSTRUMENTS, AMERICAN INSTITUTE OF PHYSICS. NEW YORK, US, Bd. 70, Nr. 5, Mai 1999 (1999-05), Seiten 2398-2401, XP000873191 ISSN: 0034-6748
- PECHMANN R ET AL: "THE NOVOLEVER: A NEW CANTILEVER FOR SCANNING FORCE MICROSCOPY MICROFABRICATED FROM POLYMERIC MATERIALS" REVIEW OF SCIENTIFIC INSTRUMENTS, Bd. 65, Nr. 12, Dezember 1994 (1994-12), Seiten 3702-3706, XP002212092 ISSN: 0034-6748

## Beschreibung

Die vorliegende Erfindung betrifft einen SPM-Sensor sowie ein Verfahren zur Herstellung derartiger Sensoren.

Raster-Kraft-Mikroskope (Scanning Probe Microscope (SPM)) sind allgemein bekannt und werden in der Praxis benutzt, um mit feinen Sensoren in atomarer Auflösung die Oberfläche von Proben abzutasten. SPMs umfassen sogenannte STM (Scanning Tunneling Microscope) und AFM (Atomic Force Microscope), die ebenfalls allgemein bekannt sind.

Bei allen diesen Mikroskopen werden Sensoren eingesetzt, die aus einem Mikrobiegebalken, im Nachfolgenden Cantilever genannt, bestehen, der an seinem einen Ende ein Halteelement und am anderen Ende eine Sensorspitze aufweist, mit der die Probe abgetastet wird.

Aus der EP 990 195 ist es bekannt einen derartigen Sensor vollständig aus einem Photolack, insbesondere SU-8 herzustellen. Gemäß dem in dieser Veröffentlichung beschriebenen Verfahren ist zwar eine Serienherstellung derartiger Sensoren möglich, jedoch müssen diese einzeln vom Substrat abgelöst werden.

In KIM B J ET AL: A self-assembled monolayer-assisted surface microfabrication and release technique. MICROELECTRONIC ENGINEERING, ELSEVIER PUBLISHERS BV., AMSTERDAM, NL, Bd. 57-58, September 2001 (2001-09), Seiten 755-760, XP004302338 ISSN: 0167-9317 wird eine aus Photolack bestehende Spitze, die auf einer Glasfaser aufgeklebt ist, beschrieben. Weder ist diese Spitze an einem Cantilever befestigt, noch ist diese an einem Halteelement angeordnet. Die in dieser Schrift beschriebenen Sensoren sind für den Einsatz in einem kommerziellen SPM absolut nicht geeignet.

US-A 5 883 387 offenbart einen SPM-Cantilever mit einem Halteelement und einer Spitze, wobei der Cantilever und die Spitze aus verschiedenen Materialien hergestellt sind. Es wird die übliche Herstellung eines Cantilevers und einer Spitze aus Sitiziumnitrit beschrieben, die an einem Haltelement aus Glas befestigt ist. Ein Rahmen mit Halterung ist dort nicht vorgesehen.

In GENOLET G ET AL: SOFT, ENTIRELY PHOTOPLASTIC PROBES FOR SCANNING FORCE MICROSCOPY. REVIEW OF SCIENTIFIC INSTRUMENTS, AMERICAN INSTITUTE OF PHYSICS, NEW YORK, US, Bd. 70, Nr. 5, Mai 1999 (1999-05), Seiten 2398-2401, XP000873191 ISSN: 0034-6748 werden die aus der EP 990 195 bekannten Sensoren beschrieben.

PECHMANN R ET AL: THE NOVOLEVER: A NEW CANTILEVER FOR SCANNING FORCE MICROSCOPY MICROFABRICATED FROM POLYMERIC MATERIALS. REVIEW OF SCIENTIFIC INSTRUMENTS, Bd. 65, Nr. 12, Dezember 1994 (1994-12), Seiten 3702-3706, XP002212092 ISSN: 0034-6748 offenbart die Herstellung von Einzelsensoren, die auch einzeln vom Substrat abgelöst werden müssen. Der Cantilever ist aus einem Photolack und weist eine vollständige Sensorspitze aus einem anderen Material auf. Aus welchem Material ein Halteelement besteht, ist dieser Schrift nicht zu entnehmen. Durch die einzelne Ablösung der Sensoren ist dieses Verfahren für eine kommerzielle Anwendung nicht geeignet.

Es ist außerdem allgemein bekannt, Sensoren und dabei insbesondere die Spitze und auch den Cantilever aus Silizium, Silizium-Verbindungen oder Metallen herzustellen. Die Herstellung von Sensoren aus SU-8 stellt ein besonders kostengünstiges Verfahren dar. Es besteht jedoch weiterhin Bedarf, Sensoren mit einer Spitze aus einem anderen Material als SU-8 bereitzustellen.

Der vorliegenden Erfindung liegt daher die Aufgabe zugrunde, einen neuen kostengünstig herstellbaren Sensor vorzuschlagen. Diese Aufgabe wird erfindungsgemäß durch einen Sensor mit den Merkmalen des Anspruchs 1 sowie für ein Verfahren mit den Merkmalen des Anspruchs.4 gelöst. Weitere vorteilhafte Ausgestaltungen sind den jeweils rückbezogenen Unteransprüchen zu entnehmen.

Gemäß der vorliegenden Erfindung sind das Halteelement und der Cantilever aus einem Photolack oder das Halteelement aus einem Photolack und der Cantilver und die vollständige Sensorspitze aus einem anderen Material hergestellt. Damit wird ein aus verschiedenen Materialien bestehender Hybridsensor bereitgestellt, der besonders kostengünstig herstellbar ist, da ein großer Teil des Sensors aus einem Photolack, vorzugsweise SU-8, hergestellt ist. Gemäß einer bevorzugten Ausführungsform sind der Cantilever und/oder die Spitze aus Silizium, einer Siliziumverbindung, Metallen oder einer Kombination daraus hergestellt. Obwohl die Haftung eines Photolacks, insbesondere von SU-8, auf Silizium, Siliziumnitrid oder auch Metallen bekanntlich sehr schlecht ist, ist es gelungen, derartige kombinierte SPM-Sensoren herzustellen. Hierzu wurde die Haftung zwischen den Materialien verbessert. Dies kann beispielsweise durch eine Verbreiterung der Cantileverstruktur unterhalb des Halteelements, der Benutzung eines auf Epoxidharzbasis basierenden Haftvermittlers, oder durch Vergrößerung der Oberfläche durch Strukturierung des Cantilevers in dreidimensionaler Richtung, wodurch eine Vernetzung des Photolacks mit dem Metall oder Siliziumnitrid auch in vertikaler Richtung erfolgt, erreicht werden.

Um die Herstellung dieser SPM-Sensoren zu vereinfachen, sind diese in einem SPM-Sensorenverbund mit einer Vielzahl von weiteren SPM-Sensoren angeordnet, die über mindestens eine Halterung mit einem Rahmen aus Photolack, vorzugsweise SU-8, verbunden sind. Alle SPM-Sensoren werden in der bekannten Art und Weise von dem darunter befindlichen Silizium abgelöst und können aus dem Halterahmen je nach Bedarf ausgebrochen werden.

Gemäß dem Verfahren wird ein derartiger Sensor wie folgt hergestellt:

Zuerst wird eine spitzenähnliche Grube in einem Substrat, beispielsweise Silizium, gebildet. Anschließend wird eine Schicht aus Silizium, eine Siliziumverbindung oder einem Metall, beispielsweise Chrom oder Aluminium, oder eine Kombination aus diesen Materialien auf dem Substrat abgelegt, die die spitzenförmige Grube füllt und mindestens einen Teil des Substrats abdeckt. Im Nachfolgenden erfolgt ein photolithographisches Strukturieren der Schicht zur Bildung der Sensorspitze oder des Cantilevers und der Sensorspitze mit anschließender Entfernung des Photolacks,das Aufbringen einer Photolackschicht zur Bildung des Halteelements, ggf. mit dem Cantilever und zur Bildung einer Rahmenstruktur und Halterungen als Verbindung zu dem Halteelement, und dann das Ablösen des SPM-Sensors von dem Substrat.

Vorzugsweise wird eine Opferschicht auf das Substrat aufgebracht, bevor die Schicht zum Füllen der spitzenförmigen Grube abgelegt wird, um die Trennung des Sensors vom Substrat zu verbessern.

In einer anderen Ausbildung des Verfahrens kann der Cantilever auch aus Photolack, insbesondere SU-8, bestehen.

Gemäß der Erfindung wird somit ein leistungsfähiges und einfaches Verfahren zur Herstellung von SPM-Sensoren bereitgestellt, das durch die Verwendung des kostengünstigen Photolackes, insbesondere SU-8, und die Verbindung der einzelnen Sensoren, ein schnelles Ablösen und Weitergeben der SPM-Sensoren an Dritte erlaubt. Die Vorlage mit der Spitze ist in bekannter Art und Weise wiederverwendbar und es werden lediglich auf dieser Fläche immer wieder die Materialen für neue Sensoren abgelegt.

Nachfolgend wird die Erfindung anhand von Ausführungsbeispielen näher erläutert. Es stellen dar:
- Figuren 1-11: das Verfahren zum Herstellen eines derartigen SPM-Hybridsensors in einem SPM-Sensorenverbund in Schnittdarstellungen und teilweise in Draufsicht; und
- Figur 12 und 13: die Draufsicht auf zwei verschiedene Varianten von SPM-Sensoren mit besonderen Maßnahmen zur Erhöhung der Haftung.

In den Ausführungsbeispielen besteht der Rahmen und somit der SPM-Sensorenverbund immer aus dem Photolack SU-8. Soweit im Text von photolithographischem Strukturieren gesprochen wird, wird darunter immer die in bekannter Art und Weise durchgeführten Maßnahmen des Aufbringens eines Photolacks, Belichten des Photolacks entsprechend einer Maske, Entwickeln des Photolacks und Entfernen des Photolacks verstanden.

Im Allgemeinen erfolgt die Herstellung derart, dass unter Verwendung eines Substrats, zum Beispiel Silizium, Gruben erzeugt werden, mit deren Hilfe Mikrospitzen abgeformt werden können, die für den Einsatz als SPM-Sensor geeignet sind. Die Mikrospitzen werden, wie bereits in der EP 990 195 beschrieben, abgeformt. Optional kann auch eine Opferschicht auf das Substrat, zum Beispiel Aluminium oder Siliziumoxid aufgebracht werden. Anschließend erfolgt das Abscheiden des Materials zur Herstellung des Cantilevers und der Spitze. Nachfolgend wird der Cantilever aus dem abgeschiedenen Material photolithographisch strukturiert, so dass sich die abgeformte Spitze an einem Ende des Cantilevers befindet. Jetzt wird der SU-8-Photolack aufgebracht und anschließend das Haltelement, der Rahmen und die Halterungen, die das Halteelement und den Rahmen miteinander verbinden, strukturiert. Die Halteelemente werden dabei so positioniert, dass der Cantilever mit der abgeformten Spitze über das Halteelement hinausragt. Im Anschluss daran erfolgt das Entfernen des Substrats bzw. Opferschicht in einem Ätzschritt, mit dem sich das Substrat bzw. die Opferschicht selektiv zum dem Photolack SU-8 und dem Material aus dem Cantilever und der Spitze bestehen, ätzen lässt. Übrig bleibt ein SPM-Sensorenverbund mit einer Vielzahl von SPM-Sensoren mit einem Rahmen, Halterungen und Halteelement aus dem Photolack SU-8, an denen die Cantilever mit Spitze befestigt sind. Sofern eine Opferschicht vorgesehen ist, ist diese ebenfalls zu entfernen und der SPM-Sensorenverbund davon abzulösen.

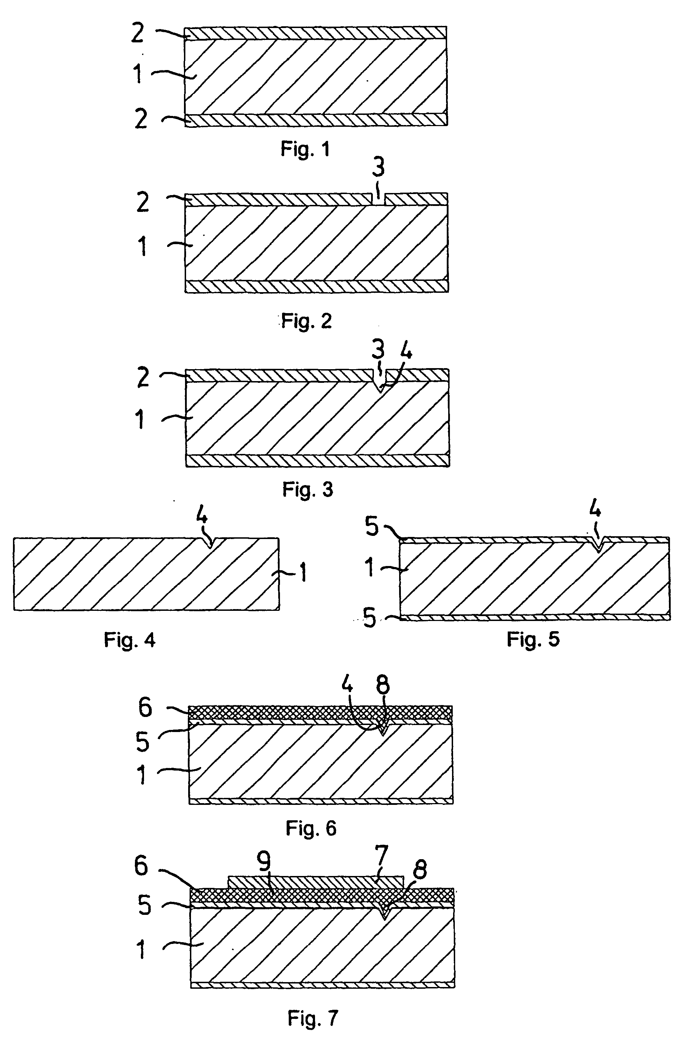

In den Figuren 1 bis 11 wird beispielhaft die Herstellung eines SPM-Sensors mit einem Halteelement aus SU-8 und mit Cantilever und Spitze aus Siliziumnitrid beschrieben. Entsprechend kann anstelle des Siliziumnitrids ein Metall, beispielsweise Aluminium oder Chrom oder auch Silizium verwendet werden.

In den nachfolgenden Figuren ist nur ein Siliziumsubstrat 1 dargestellt, wobei dem Fachmann klar ist, dass es sich hierbei um einen gesamten Wafer handelt, auf dem eine Vielzahl von Sensoren gleichzeitig prozessiert werden.

Figur 1 zeigt als Ausgangsmaterial Silizium 1 auf das beidseitig eine Schicht aus Siliziumoxid 2 aufgebracht ist.

Als nächstes wird die Oxidschicht in üblicher Weise durch Aufbringen eines Photolacks, Belichten des Photolacks, Entwickeln des Photolacks, Ätzen der Oxidschicht z.B. mit Flusssäure (HF) und Entfernen des Photolacks strukturiert, so dass, wie in Figur 2 gezeigt, in der Oxidschicht 2 eine Öffnung 3 für die Herstellung einer in Figur 3 dargestellten Grube 4 erzeugt wird. Die in der Figur 3 dargestellte Grube 4 in dem Siliziumsubstrat wird mittels einer Ätzlösung, beispielsweise Kalilauge (KOH) hergestellt. Diese Grube 4 erlaubt das Abformen der für den SPM-Sensor erforderlichen Spitze.

Als nächstes wird beidseitig die Oxidschicht 2 mittels einer Ätzlösung, beispielsweise HF, wie in Figur 4 dargestellt, entfernt.

Zur Anschärfung der Grube 4 erfolgt eine erneute beidseitige Oxidation des Silizium 1 mit einer weiteren Siliziumoxidschicht 5 als Opferschicht auf beiden Seiten des Substrats 1 (Figur 5). Dieser Prozessschritt ist allgemein bekannt und üblich zur Anschärfung von Gruben.

Als nächstes wird eine Siliziumnitridschicht 6 auf die Siliziumoxidschicht 5' zum Auffüllen der Grube 4 aufgebracht. Die Siliziumnitridschicht 6 kann beispielsweise durch das PECVD-Verfahren (Plasma Enhanced Chemical Vapor Deposition) aufgebracht werden. Die Schichtdicke beträgt 0,1µm bis 0,3µm. Das Ergebnis ist in Figur 6 dargestellt.

Figur 7 zeigt die Struktur mit einem aufgebrachten Photolack 7 auf der Siliziumnitridschicht 6 mit der der darunter befindliche Teil der Siliziumnitridschicht für den späteren Cantilever 9 strukturiert wird. Unterhalb des Photolacks befindet sich auch die Spitze 8 in der Grube 4 in dem Siliziumoxid 5. Die Strukturierung des Cantilevers erfolgt in der üblichen Art und Weise durch Belackung des gesamten Wafers mit Photolack 7, Belichten des Photolacks 7 und Entwickeln des Photolacks 7.

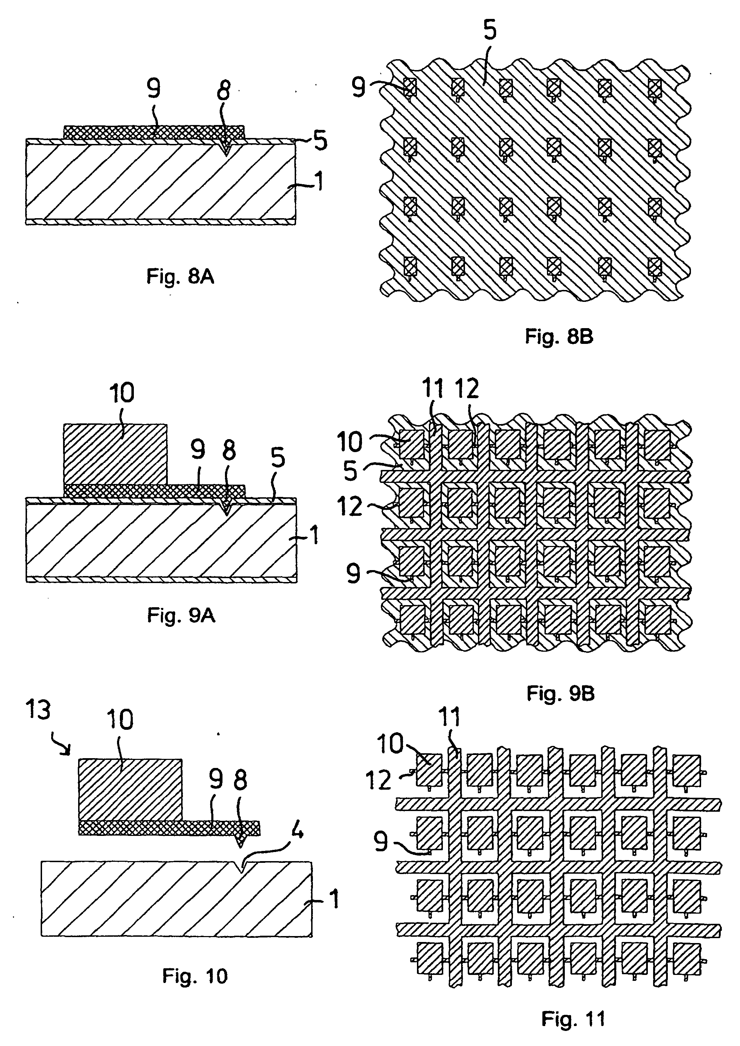

Durch Trockenätzen und anschließende Entfernung des Photolacks 7 wird die Siliziumnitridschicht 6 strukturiert, so dass sich der Cantilever 9 mit der Spitze 8 ausbildet (Figur 8A). Figur 8B zeigt die Draufsicht auf den Wafer mit einer Vielzahl bereits ausgebildeter rechteckiger Cantilever 9 mit einem breiten Bereich, auf den später das Halteelement aufgebracht wird und einem schmalen Bereich an dessen freiende Ende sich die Spitze befindet.

Als nächstes wird eine SU-8 Schicht 10 auf dem gesamten Wafer aufgebracht und in der üblichen Art und Weise photolithographisch strukturiert und dabei das Halteelement 10 als auch der Rahmen 11 mit den Halterungen 12 strukturiert. Figur 9A zeigt das Ergebnis dieses Verfahrensschrittes im Schnitt und Figur 9B in der Draufsicht. In Figur 9B ist auch der Rahmen 11 mit den Halterungen 12, ebenfalls aus SU-8 ersichtlicht. Die SU-8-Schicht des Halteelements 10 und des Rahmens beträgt 200 µm bis 400 µm.

Nachfolgend wird der fertige SPM-Sensor 13 mit dem Halteelement 10 aus SU-8, dem Cantilever 9 und der Spitze 8 von dem Substrat 1 durch Entfernen der Opferschicht, in diesem Fall der Oxidschicht 5, durch HF (Figur 10) abgelöst.

Figur 11 zeigt eine Draufsicht auf den fertigen Rahmen 11 mit den Halterungen 12 und den darin befindlichen SPM-Sensoren in der Draufsicht mit dem Halteelement 10, dem Rahmen 11 und den Halterungen 12 aus SU-8, wie er verkauft werden kann. Die Trennung der einzelnen SPM-Sensoren 13 von dem Rahmen 11 erfolgt durch Herausbrechen aus dem Rahmen 11.

Nach dem Ablösen des SPM-Sensors 13 kann der Wafer mit den vorbereiteten Gruben 4 erneut für die Herstellung weiterer SPM-Sensoren verwendet werden.

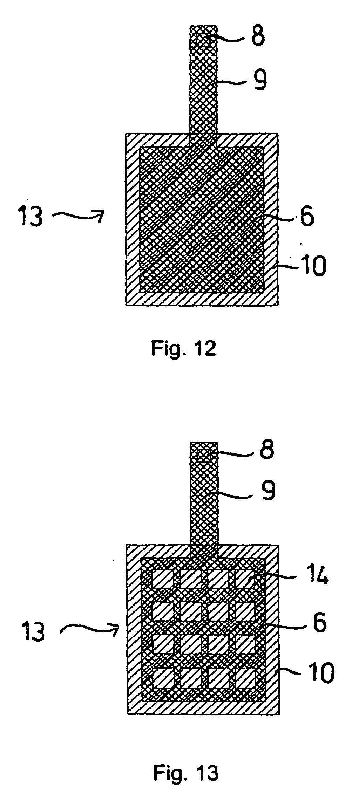

Figur 12 zeigt die Draufsicht auf einen SPM-Sensor 13 mit dem Halteelement 10, dem Cantilever 9 und der Spitze 8, wobei unterhalb des Halteelements 10 die Cantileverstruktur aus in diesem Ausführungsbeispiel Siliziumnitrid verbreitert ist, so dass sich dadurch eine größere Oberfläche ergibt, die die Haftung verbessert.

Figur 13 zeigt eine Vergrößerung der Oberfläche dadurch, dass die Cantileverstruktur beispielsweise Öffnungen 14 aufweist, so dass auch in vertikaler Richtung eine Vernetzung des SU-8 Photolacks mit dem jeweiligen Metall oder dem Siliziumnitrid erreicht wird.

Eine andere Möglichkeit besteht darin, einen auf Epoxidharzbasis basierenden Haftvermittler zu verwenden und die einzelnen vorgeschlagenen Maßnahmen miteinander zu kombinieren, um damit eine ausreichende Haftung zu gewährleisten.

Vorstehend wurde die Herstellung eines SPM-Sensors 13 mit einem Halteelement 10 aus SU-8 beschrieben. Sofern nur die Spitze 8 aus einem anderen Material hergestellt sein soll, wird nur diese strukturiert und nach dem Aufbringen der SU-8 Schicht auch der Cantilever 9 durch entsprechende Masken erzeugt. Die Dicke der Cantileverstruktur variiert nach Material und Cantilevereigenschaft und kann zwischen 0,1µm und 6µm liegen.

## Patentansprüche

1. SPM-Sensor (13) mit einem Cantilever (9), einem Halteelement (10) am einen Ende des Cantilevers (9) und einer aus der Oberfläche des Cantilevers (9) herausragenden Sensorspitze (8) am anderen Ende des Cantilevers (9), **dadurch gekennzeichnet, dass** das Halteelement (10) und der Cantilever (9) aus einem Photolack und die vollständige Sensorspitze (8) aus einem anderen Material besteht, oder das Halteelement (10) aus einem Photolack, und der Cantilever (9) und die vollständige Sensorspitze (8) aus einem anderen Material bestehen, und dass der SPM-Sensor (13) in einem SPM-Sensorenverbund mit einer Vielzabl von weiteren SPM-Sensoren, die über mindestens eine Halterung (12) aus Photolack mit einem Rahmen (11) aus Photolack verbunden sind, angeordnet ist.

2. SPM-Sensor nach Anspruch 1, **dadurch gekennzeichnet, dass** der Cantilever (9) und/oder die Spitze (8) aus Silizium, einer Siliziumverbindung, Metallen oder einer Kombination daraus bestehen.

3. SPM-Sensor nach einem der vorangegangenen Ansprüche, **dadurch gekennzeichnet, dass** der Photolack SU-8 ist.

4. Verfahren zur Herstellung eines SPM-Sensors bestehend aus einem Halteelement (10), einem Cantilever (9) und einer aus der Oberfläche des Cantilevers (9) herausragenden Sensorspitze (8) am freien Ende des Cantilevers mit folgenden Schritten:
A Bilden eines spitzenähnlichen Einschnittes (4) in einem Substrat (1);
B Ablegen einer Schicht (6) aus Silizium, aus einer Silizium-Verbindung oder aus Metall, die den spitzenförmigen Einschnitt (4) füllt und mindestens einen Teil des Substrats (1) abdeckt;
C Photolithographisches Strukturieren der Schicht (6) zur Bildung der Sensorspitze (8), oder des Cantilevers (9) und der Sensorspitze (8),
D Aufbringen einer Photolackschicht zur Bildung des Halteelements (10), ggf. mit dem Cantilever (9), und zur Bildung eines Rahmens (11) mit Halterungen (12) als Verbindungen zu dem Halteelement (10); und
E Ablösen des SPM-Sensors (13) von dem Substrat (1).

5. Verfahren nach Anspruch 4, **dadurch gekennzeichnet, dass** vor Schritt B eine Opferschicht (5) auf das Substrat (1) aufgebracht wird, um die Trennung des Sensors (13) vom Substrat (1) zu verbessern.

## Claims

1. An SPM sensor (13) having a cantilever (9), a holding element (10) at one end of the cantilever (9) and a sensor tip (8) at the other end of the cantilever (9), projecting out of the surface of the cantilever (9), **characterised in that** the holding element (10) and the cantilever (9) is made from a photoresist and the complete tip (8) is made from another material, or the holding element (10) is made from a photoresist and the cantilever (9) and the complete sensor tip (10) is made from another material, and wherein the SPM sensor (13) is arranged in an SPM sensor assembly having a multiplicity of further SPM sensors which are connected by means of at least one holder (12) made of photoresist to a frame (11) made from photoresist.

2. The SPM sensor as claimed in claim 1, **characterised in that** the cantilever (9) and/or the tip (8) is made from silicon, a silicon compound, metals or a combination thereof.

3. The SPM sensor as claimed in one of the preceding claims, **characterised in that** the photoresist is SU-8.

4. A process for producing an SPM sensor comprising a holding element (10), a cantilever (9) and a sensor tip (8), which projects out of the surface of the cantilever (9), at the free end of the cantilever, comprising the following steps:
A Forming a tip-like incision (4) in a substrate (1);
B Depositing a layer (6) of silicon, of a silicon compound or of metal, which fills the tip-like incision (4) and covers at least part of the substrate (1);
C Photolithographic patterning of the layer (6) in order to form the sensor tip (8), or to form the cantilever (9) and the tip (8);
D Applying a photoresist layer to form the holding element (10), if appropriate together with the cantilever (9); and for forming a frame (11) with holders (12) as connections to the holding element (10); and
E Detaching the SPM sensor (13) from the substrate (1).

5. The process as claimed in claim 4, **characterized in that** a frame (11) with holders (12) as connections to the holding element (10) are additionally produced in step D.

## Revendications

1. Capteur de type SPM (13) avec une micro poutre flexible ou cantilever (9), un élément de retenue (10) à une extrémité du cantilever (9) et une pointe de capteur (8) dépassant de la surface du cantilever (9) à l'autre extrémité du cantilever (9),
**caractérisé par le fait que** l'élément de retenue (10) et le cantilever (9) sont constitués d'une laque photosensible et la pointe de capteur (8) complète d'un autre matériau, ou l'élément de retenue (10) d'une laque photosensible et le cantilever (9) et la pointe de capteur (8) complète d'un autre matériau, et que le capteur de type SPM (13) est disposé dans un réseau de capteurs de type SPM comprenant une pluralité d'autres capteurs de type SPM qui sont reliés par au moins une attache (12) en laque photosensible à un cadre (11) en laque photosensible.

2. Capteur de type SPM selon la revendication 1, **caractérisé par le fait que** le cantilever (9) et/ou la pointe (8) sont constitués de silicium, de composés de silicium, de métaux ou d'une combinaison de ceux-ci.

3. Capteur de type SPM selon l'une des revendications précédentes, **caractérisé par le fait que** la laque photosensible est SU-8.

4. Procédé de fabrication d'un capteur de type SPM composé d'un élément de retenue (10), d'une micro poutre flexible ou cantilever (9) et d'une pointe de capteur (8) dépassant de la surface du cantilever (9) à l'extrémité libre du cantilever, comprenant les étapes suivantes :
A formation d'une entaille en forme de pointe (4) dans un substrat (1) ;
B dépôt d'une couche (6) de silicium, d'un composé de silicium ou de métal qui remplit l'entaille en forme de pointe (4) et recouvre au moins une partie du substrat (1);
C structuration photolithographique de la couche (6) pour former la pointe de capteur (8) ou le cantilever (9) et la pointe de capteur (8) ;
D application d'une couche de laque photosensible pour former l'élément de retenue (10), le cas échéant avec le cantilever (9), et pour former un cadre (11) avec des attaches (12) pour la liaison avec l'élément de retenue (10)
et
E séparation du capteur de type SPM (13) du substrat (1).

5. Procédé selon la revendication 4, **caractérisé par le fait que** l'on applique une couche sacrificielle (5) sur le substrat (1) avant l'étape B afin d'améliorer la séparation du capteur (13) du substrat (1).
